Europäisches Patentamt

European Patent Office

Office européen des brevets

(11) Publication number: **0 076 432**
**B1**

# EUROPEAN PATENT SPECIFICATION

(45) Date of publication of patent specification: **08.01.86**

(51) Int. Cl.⁴: **B 25 J 11/00**

(21) Application number: **82108810.1**

(22) Date of filing: **23.09.82**

(54) Handling apparatus.

(30) Priority: **25.09.81 JP 152779/81**

(43) Date of publication of application:
**13.04.83 Bulletin 83/15**

(45) Publication of the grant of the patent:
**08.01.86 Bulletin 86/02**

(84) Designated Contracting States:
**DE FR GB**

(56) References cited:
**EP-A-0 001 163**
**SU-A- 763 082**
**US-A-3 255 893**

(73) Proprietor: **Matsushita Electric Industrial Co., Ltd.**
**1006, Oaza Kadoma**
**Kadoma-shi Osaka-fu, 571 (JP)**

(72) Inventor: **Inoue, Toshitsugu**
**5-19, Matsuigaoka 4-chome Tanabe-cho**
**Tsuzuki-gun Kyoto Pref. 610-03 (JP)**
Inventor: **Nakada, Akiyoshi**
**1-40, Shimizu**
**Suita City, 565 (JP)**
Inventor: **Kaji, Haruo**
**25-3, Midou-cho**
**Kadoma City, 571 (JP)**
Inventor: **Doi, Makoto**
**4-523 Hamadera-showacho**
**Sakai City, 592 (JP)**
Inventor: **Takezawa, Kuninori**
**1-309, 2-1, Midorigaoka**
**Ikeda City, 563 (JP)**

(74) Representative: **Dr. Elisabeth Jung Dr. Jürgen Schirdewahn Dipl.-Ing. Claus Gernhardt**
**Clemensstrasse 30 Postfach 40 14 68**
**D-8000 München 40 (DE)**

Courier Press, Leamington Spa, England.

## Description

Background of the invention
1. Field of the technology
The present invention relates to a handling apparatus having freedom of motion like a human hand by using link mechanisms.

2. Description of the prior art
Hitherto several configurations have been proposed for handling apparatus having freedom of motion like a human hand. Use of pivotted or fulcrumed link mechanisms has an advantage of easy controlling of angular position of its hand, and accordingly, such mechanism is widely used in recent years. Japanese published unexamined Patent No. Sho 55-90287 shows such example. Such conventional handling apparatus has a shortcoming that moving range is small and that its mechanism is too large.

There is also known from EP—A—0 001 163, Fig. 8, a handling apparatus having a first parallelogram link mechanism which is movable to various positions in a near horizontal direction, to which there is connected in series a second parallelogram link mechanism which is movable to various positions in a near vertical direction. Thus the functional element of said handling apparatus which for example is a hook supporting a load may be moved in a horizontal plane by the first parallelogram link mechanism and in a vertical plane by the second parallelogram link mechanism. Such conventional handling apparatus is, however, complicated in structure and is quite large.

Summary of the invention
The present invention provides handling apparatuses which are simple in mechanical construction, easy to control and wide in moving range.

According to the present invention there is provided a handling apparatus having a first parallelogram link mechanism which is movable to various positions in a near horizontal direction, a second parallelogram link mechanism which is connected in series to said first parallelogram link mechanism and to a gripping means and control means for controlling said first parallelogram link mechanism and said second parallelogram link mechanism individually from each other, characterized in that said second parallelogram link mechanism is movable to various positions in a different horizontal direction being substantially perpendicular to said horizontal direction of the movement provided for said first parallelogram mechanism and that individually controllable vertical driving means are connected in series to the end of said first parallelogram link mechanism opposite to the end connected to said second parallelogram link mechanism and being operable to compensate rotational movements about the respective fulcrums of said first and second parallelogram link mechanisms and to effect positioning in vertical direction.

Brief explanation of the drawing
Fig. 1 is an elevational side view of a handling apparatus embodying the present invention.
Fig. 2 is an elevational front view of the apparatus of Fig. 1.
Fig. 3 is an elevational side view of the apparatus at an operating position.

Description of the preferred embodiment
A handling apparatus in accordance with the present invention comprises
a first parallelogram link mechanism,
a second parallelogram link mechanism which is connected in series to the first parallelogram link mechanism and to holding means, moving directions of both parallelogram links making substantially right angle, and
control means for controlling the first parallelogram link mechanism and the second parallelogram link mechanism individually from each other.

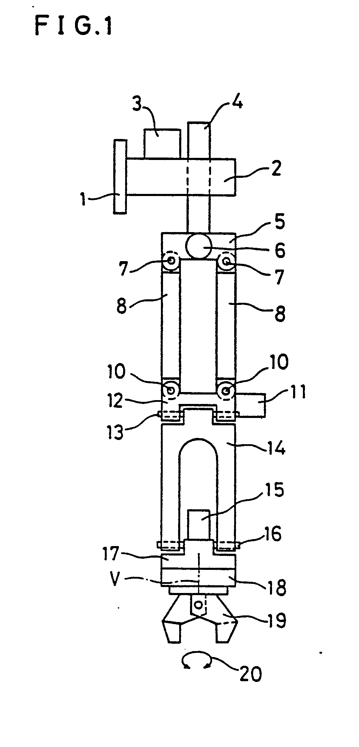

A preferred example is elucidated with reference to Fig. 1, Fig. 2 and Fig. 3.

A vertical drive unit 2 having a vertical drive motor 3 and a vertical rod 4 is fixed to a base 1 which is to be mounted on a large frame or a wall (not shown). The vertical rod 4 is vertically driven by means of the vertical drive motor 3 through a known mechanism such as pinion and rack, worm gear and rack, wire and pulley, etc.

A first drive unit 5 is fixed to the bottom end of the vertical rod 4 and has two parallel links 8, 8 of substantially the same length, which are journaled by parallel pins 7, 7. The first drive unit 5 further has a motor 6 for driving the links 8, 8 by means of known mechanism such as gears, etc.

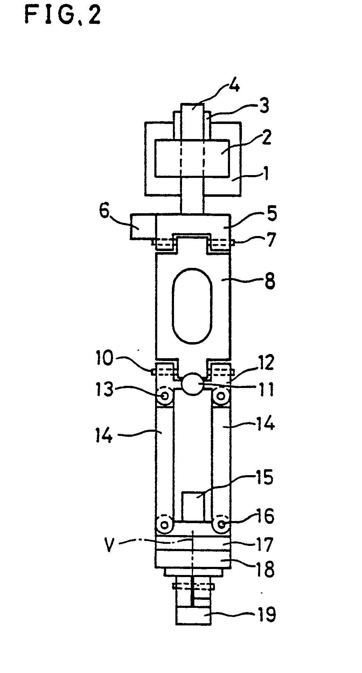

Lower ends of the parallel links 8, 8 are journaled or fulcrumed on a second drive unit 12 by parallel pins 10, 10. Spacing and directions of the parallel pins 7, 7 and spacing and directions of the parallel pins 10, 10 are selected substantially the same and horizontal, and the four pins are disposed substantially parallel, so that the second drive unit 12 is always parallel to the first drive unit 5 (i.e., horizontal), even when the former is driven rightwards or leftwards of Fig. 1 (i.e. frontwards or backwards of Fig. 2). The second drive unit 12 has a pair of parallel links 14, 14, which are of substantially the same length and are journaled by parallel pins 13, 13. These pins 13, 13 are in a direction perpendicular to the pins 7, 7. The second drive unit 12 further has a motor 11 for driving the links 14, 14 by means of known mechanism such as gears, etc.

Lower ends of the parallel links 14, 14 are journaled or fulcrumed on a third drive unit 17 by parallel pins 16, 16. Spacing and directions of the parallel pins 13, 13 and spacing and directions of the parallel pins 16, 16 are selected substantially the same and horizontal, and the four pins are disposed substantially parallel, so that the third drive unit 17 is always parallel to the second drive unit 12 i.e., horizontal, even when the former is driven rightwards or leftwards of Fig. 2 (i.e. frontwards or backwards of Fig. 1).

A hand base 18 having a known hand 19 thereunder is mounted integral to the third drive unit 17, and a hand drive motor 15 for rotation of the hand 19 around a vertical axis V is fixed on the third drive unit 17. Open and close motions of the hand 19 are operated by a known air cylinder means or a motor (not shown).

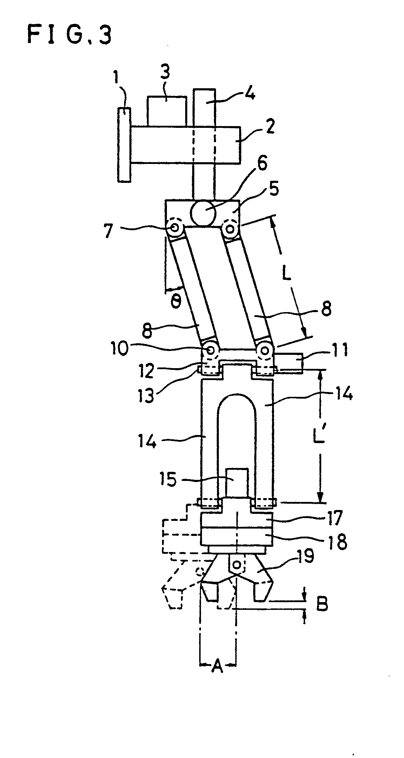

The operation is elucidated in reference to Fig. 3, which shows a case where the hand 19 is driven by a distance A from its resting position shown by dotted lines, by driving of the links 8, 8 rightwards of Fig. 3 by the motor 6 by an angle θ from the resting (vertical) position. Since the links 8, 8, the first drive unit 5 and the second drive unit 12 form a parallelogram as shown in Fig. 3, the second drive unit 12 is kept horizontal (i.e. parallel to the first drive unit 5). In this case, since the links 8, 8, becomes oblique to the vertical line, the second unit 12 is lifted by a certain distance, and accordingly, the lower tip of the hand 19 is lifted by the certain distance, which is shown as B in Fig. 3. Then the following relation holds:

$$A = L \times \sin \theta \qquad (1)$$

and

$$B = L \times (1 - \cos \theta) \qquad (2)$$

where

A is a driven distance in horizontal direction,

B is a driven distance in vertical direction,

L is length of the links 8, 8 (length between the pin 7 and 10), and

θ is an angle of the links 8, 8 to the vertical line.

Therefore, in order to make an accurate horizontal motion of the hand by driving the links 8, 8, the hand 19 must be driven downwards, and such downward motion is made by driving the vertical rod 4 downwards by rotation of the vertical drive motor 3.

The same is applicable to the motion of the second links 14, 14 by the motor 11. When both the first links 8, 8 and the second links 14, 14 are driven to bring the hand to a desired position, by driving the first links to the angle of θ and the second links to an angle of θ', then overall distance B' of downward driving of the vertical rod 4 should be

$$B' = L \times (1 - \cos \theta) + L' \times (1 - \cos \theta') \qquad (3)$$

where L' is length of the second links.

The above-mentioned corrective downward motion of the vertical rod 4 is given by use of known computing means, such as microprocessor, by simply inputting the driven angles θ and θ', which are given, for instance, as pulse numbers to the driving circuits of the motors 6 and 11, respectively.

Of course, by further driving the vertical rod 4, any vertical motion, for instance, large height upward or downward motion of the hand 19 is attainable.

The parallel links 14, 14 are U-shaped with hollow part between two leg parts in order not to collide with the motor 15 and also for saving weight.

The above-mentioned handling apparatus can handle and carry out movements in three dimensional space.

The handling apparatus in accordance with the present invention has the following advantages:

(1) The relations of the equations (1), (2) and (3) are very simple and easy for known computing means, for example, a microcomputer, and therefore controlling for accurate horizontal motions of the hand 19 is easy.

(2) Since positional directions of the driving units 12 and 17 are always parallel to that of the first driving unit 5, the axis V of the hand 19 is kept always vertical, and therefore, the handling action is easy and reliable.

(3) Since the parallel links 8, 8 and 14, 14, both are journaled at their upper end and driven to swing at their lower ends, space required for motion of the apparatus is small upwards. This is convenient and useful for actual manufacturing line, where air hoses, electric wires oil hoses are connected in a space upper to the handling apparatus.

## Claims

1. In a handling apparatus having

a first parallelogram link mechanism (7, 8, 10) which is movable to various positions in a near horizontal direction,

a second parallelogram link mechanism (13, 14, 16) which is connected in series to said first parallelogram link mechanism and to a gripping means (19)

and control means for controlling said first parallelogram link mechanism and said second parallelogram link mechanism individually from each other,

characterized in that said second parallogram link mechanism (13, 14, 16) is movable to various positions in a different horizontal direction being substantially perpendicular to said horizontal direction of the movement provided for said first parallelogram mechanism (7, 8, 10) and that individually controllable vertical driving means (2) are connected in series to the end of said first parallelogram link mechanism opposite to the end connected to said second parallelogram link mechanism and being operable to compensate rotational movements about the respective fulcrums (7, 13) of said first and second parallelogram link mechanisms and to effect positioning in vertical direction.

2. A handling apparatus in accordance with claim 1, characterized in that

said first parallelogram link mechanism comprises a pair of upper fulcrums (7) which are disposed substantially in a horizontal plane with a predetermined gap inbetween on a first unit member (5) and a pair of lower fulcrums (10) which are disposed substantially on a horizontal plane with said predetermined gap inbetween on a second unit member (12), upper end parts and lower end parts of links (8) of said first parallelogram link mechanism being journaled by said fulcrums, and

said second parallelogram link mechanism comprises a pair of upper fulcrums (13) which are disposed substantially on a horizontal plane with a predetermined gap inbetween on said said second unit member (12) and a pair of lower fulcrums (16) which are disposed substantially on a horizontal plane with said predetermined gap inbetween on a third unit member (17), upper end parts and lower end parts of links (14) of said second parallelogram link mechanism being journaled by said fulcrums,

the fulcrums of said second parallelogram link mechanism having axes in a direction substantially perpendicular to those of said first parallelogram link mechanism.

3. A handling apparatus in accordance with claim 1 or 2, characterized in that

said vertical driving means (2, 4) is driven to compensate vertical motion of said gripping means (19) responding to movements of said first parallelogram link mechanism (7, 8, 10) and said second parallelogram link mechanism (13, 14, 16).

**Patentansprüche**

1. Handhabungsgerät, mit

einem ersten Parallelogramm-Lenkermechanismus (7, 8, 10), der in einer nahezu horizontalen Richtung in verschiedene Stellungen bewegbar ist,

einem zweiten Parallelogramm-Lenkermechanismus (13, 14, 16), der in Reihe mit dem ersten Parallelogramm-Lenkermechanismus und mit einer Greifeinrichtung (19) geschaltet ist, und mit

einer Steuereinrichtung zum Steuern des ersten Parallelogramm-Lenkermechanismus und des zweiten Parallelogramm-Lenkermechanismus individuell voneinander, dadurch gekennzeichnet,

daß der zweite Parallelogramm-Lenkermechanismus (13, 14, 16) in verschiedene Stellungen in einer unterschiedlichen waagerechten Richtung bewegbar ist, die zu der waagerechten Richtung der Bewegung, die für den ersten Parallelogramm-Lenkermechanismus (7, 8, 10) vorgesehn ist, im wesentlichen rechtwinklig verläuft, und daß individuell steuerbare senkrechte Antriebseinrichtungen (2) mit demjenigen Ende des ersten Parallelogramm-Lenkermechanismus, welches dem Ende gegenüberliegt, das mit dem zweiten Parallelogramm-Lenkermechanismus verbunden ist, in Reihe geschaltet und betätigbar sind, um Drehbewegungen des ersten und des zweiten Parallelogramm-Lenkermechanismus um die betreffenden Drehpunkte (7, 13) zu kompensieren und ein Positionieren in vertikaler Richtung zu bewirken.

2. Handhabungsgerät nach Anspruch 1, dadurch gekennzeichnet, daß

der erste Parallelogramm-Lenkermechanismus ein Paar von oberen Drehpunkten (7), die im wesentlichen in einer horizontalen Ebene mit einem vorbestimmten Spalt zwischen sich an einem Teil einer ersten Einheit (5) angeordnet sind, und ein Paar von unteren Drehpunkten (10) aufweist, die im wesentlichen an einer horizontalen Ebene mit dem vorbestimmten Spalt zwischen sich an einem Teil einer zweiten Einheit (2) angeordnet sind, obere Endteile und untere Endteile von Lenkern (8) des ersten Parallelogramm-Lenkermechanismus durch die Drehpunkte gelagert sind, und

der zweite Parallelogramm-Lenkermechanismus ein Paar von oberen Drehpunkten (13), die im wesentlichen an einer horizontalen Ebene mit einem vorbestimmten Spalt zwischen sich an dem Teil der zweiten Einheit (12) angeordnet sind, und ein Paar von unteren Drehpunkten (16) aufweist, die im wesentlichen an einer horizontalen Ebene mit dem vorbestimmten Spalt zwischen sich an einem Teil einer dritten Einheit (17) angeordnet sind, obere Endteile und untere Endteile von Lenkern (14) des zweiten Parallelogramm-Lenkermechanismus durch die genannten Drehpunkte gelagert sind,

die Drehpunkte des zweiten Parallelogramm-Lenkermechanismus Achsen haben in einer Richtung im wesentlichen rechtwinklig zu denen des ersten Parallelogramm-Lenkermechanismus.

3. Handhabungsgerät nach Anspruch 1 oder 2, dadurch gekenekkzeichnet, daß

die vertikale Antriebseinrichtung (2, 4) angetrieben ist, um vertikale Bewegung der Greifeinrichtung (19) beim Ansprechen auf Bewegungen des ersten Parallelogramm-Lenkermechanismus (7, 8, 10) und des zweiten Parallelogramm-Lenkermechanismus (13, 14, 16) zu kompensieren.

**Revendications**

1. Appareil de manutention comportant:

— un premier mécanisme à biellettes en parallélogramme (7, 8, 10) qui est mobile jusqu'à diverses positions dans une direction presque horizontale;

— un second mécanisme à biellettes en parallélogramme (13, 14, 16) qui est connecté en série au premier mécanisme à biellettes en parallélogramme et à un moyen de préhension (19);

— et un moyen de commande pour commander le premier mécanisme à biellettes en parallélogramme et le second mécanisme à biellettes en paraléllogramme, individuellement l'un vis-à-vis de l'autre;

caractérisé en ce que le second mécanisme à biellettes en parallélogramme (13, 14, 16) est mobile jusqu'à diverses positions dans une direction horizontale différente qui est sensiblement perpendiculaire à la direction horizontale du mouvement fourni pour le premier mécanisme à parallélogramme (7, 8, 10) et en ce que des moyens (2) d'entraînement verticaux contrôlables individuellement sont connectés en série à l'extrémité du premier mécanisme à biellettes en parallélogramme opposé à l'extrémité reliée au second méchanisme à biellettes en parralléogramme et pouvant fonctionner pour compenser tous mouvements rotatoires autour des points respectifs de pivotement (7, 13) des premier et second mécanismes à biellettes en parallélogramme et pour effectuer un positionnement dans la direction verticale.

2. Appareil de manutention selon la revendication 1, caractérisé en ce que:

— le premier mécanisme à biellettes en parallélogramme comprend une paire d'axes supérieurs de pivotement (7) qui sont disposés pratiquement dans un plan horizontal avec un intervalle prédéterminé entre eux zur un élément (5) du premier ensemble et une paire d'axes inférieurs de pivotement (10) qui sont disposés pratiquement dans un plan horizontal avec un espace prédéterminé entre eux sur un élément (12) du second ensemble, les parties extrêmes supérieures et les parties extrêmes inférieures des biellettes (8) du premier mécanisme à biellettes en parallélogramme étant montées sur ces axes de pivotement; et

— le second mécanisme à biellettes en parallélogramme comprend une paire d'axes supérieurs de pivotement (13) qui sont disposés pratiquement dans un plan horizontal avec un espace prédéterminé entre eux sur l'élément (12) du second ensemble, et une paire d'axes inférieurs de pivotement (16) qui sont disposés pratiquement dans un plan horizontal avec l'espace prédéterminé entre eux sur un élément (17) du troisième ensemble, les parties extrêmes supérieures et les parties extrêmes inférieures des biellettes (14) du second mécanisme à biellettes en parallélogramme étant montées sur ces axes de pivotement;

— les axes de pivotement du second mécanisme à biellettes en parallélogramme ayant des axes se trouvant dans une direction pratiquement perpendiculaire à ceux du premier mécanisme à biellettes en parallélogramme.

3. Appareil de manutention selon la revendication 1 ou la revendication 2, caractérisé en ce que:

— le moyen d'entraînement vertical (2, 4) est entraîné pour compenser le déplacement vertical du moyen de préhension (19) en réponse à de mouvements du premier mécanisme à biellettes en parallélogramme (7, 8, 10) et du second mécanisme à biellettes en parallélogramme (13, 14, 16).

FIG.1

FIG.2

# F I G. 3